# EUROPEAN PATENT APPLICATION

(11) **EP 4 783 313 A1**
(43) Date of publication of application: **29.07.2026**
(21) Application number: 25867209.6
(22) Date of filing: 10.07.2025
(51) Int. Cl.: H01M 50/152, H01M 10/42, H01M 50/159, H01M 50/107, H01M 50/166, H01M 50/186

(54) **CAP, GAS GENERATING DEVICE INCLUDING CAP, AND LEAK MEASURING SYSTEM INCLUDING GAS GENERATING DEVICE**

(30) Priority: 19.11.2024 KR 20240165118
(71) Applicant: LG ENERGY SOLUTION, LTD., Seoul 07335 (KR)
(72) Inventor: CHO, Hyun Jun, Daejeon 34122 (KR); PARK, Yang Kyu, Daejeon 34122 (KR); YOO, Jong Deok, Daejeon 34122 (KR)
(74) Representative: Goddar, Heinz J.
(86) International application number: PCT/KR2025/010036
(87) International publication number: WO 2026/111084

(57) **Abstract**

A gas generation apparatus according to the present disclosure includes a detection case having a shape corresponding to a battery case of a secondary battery, the detection case having an opening to accommodate an electrolyte inside; and a detection cap having a passage hole through which an electrolyte gas generated from the electrolyte passes, the detection cap configured to cover the opening, wherein the passage hole has a diameter configured to allow the electrolyte gas generated by natural evaporation of the electrolyte to escape at a target concentration.

## Description

### TECHNICAL FIELD

### CROSS-REFERENCE TO RELATED APPLICATIONS

This application is based on and claims priority from Korean Patent Application No. 10-2024-0165118 filed on November 19, 2024 with the Ministry of Intellectual Property, the disclosure of which is incorporated herein in its entirety by reference.

### TECHNICAL FIELD

The present disclosure relates to a cap, a gas generation apparatus including the cap, and a leak measurement system including the gas generation apparatus. More particularly, the present disclosure relates to a gas generation apparatus to generate a target concentration of gas, a cap included in the gas generation apparatus and a leak measurement system including the same.

### BACKGROUND

A secondary battery includes an electrolyte located within a battery case. In particular, a cylindrical secondary battery may include a battery case cap located on top of a cylindrical battery case and a battery case body that forms the remaining cylindrical shape except a plate shape. The battery case body may accommodate an electrode assembly provided by winding electrodes and the electrolyte. The battery case body has an opening at one side, through which the electrode assembly and the electrolyte are put inside, and the battery case cap may be placed at a location corresponding to the opening of the battery case body and joined to the battery case body by welding to cover and seal the opening of the battery case body.

During welding, in the event of overwelding, cracks may occur in the battery case. Alternatively, some parts may not be welded during welding. When defects occur, the electrolyte may leak out of the battery case. Accordingly, it is necessary to detect welding defects. Defect detection in secondary batteries is done by selecting secondary battery samples, drilling a hole in the battery case, injecting inert gas and testing inert gas leaks.

Because this test method causes damage to the secondary battery and the tested secondary battery cannot be sold, total inspection to detect welding defects in secondary batteries is impossible in reality.

The above-described background is information possessed or acquired by the inventor in the process of deriving the present disclosure, and is not necessarily the prior art published and known to the general public before the time of filing.

### DISCLOSURE

### TECHNICAL PROBLEM

The present disclosure is designed to solve the above-described problems, and therefore the present disclosure is directed to providing a leak measurement system capable of providing a method for testing an electrolyte leak without causing damage to a secondary battery.

The technical problems of the present disclosure to be solved by this disclosure are not limited to the aforementioned technical problems, and these and other technical problems will be clearly understood by persons having ordinary skill in the technical field pertaining to the present disclosure from the following description.

### TECHNICAL SOLUTION

A gas generation apparatus according to an embodiment of the present disclosure includes a detection case having a shape corresponding to a battery case of a secondary battery, the detection case having an opening to accommodate an electrolyte inside, and a detection cap having a passage hole through which an electrolyte gas generated from the electrolyte passes, the detection cap configured to cover the opening, wherein the passage hole has a diameter configured to allow the electrolyte gas generated by natural evaporation of the electrolyte to escape at a target concentration.

The target concentration may be equal to or higher than a minimum concentration of the electrolyte gas that can be measured by a gas detection sensor when a crack occurs in the secondary battery.

The diameter of the passage hole may be equal to or less than 7/2100 of a diameter of the detection cap.

The diameter of the passage hole may be equal to or less than 1/21000 of a diameter of the detection cap.

The diameter of the passage hole may be 10 µm or less.

The detection cap may include a passage hole forming portion adjacent to the passage hole to form the passage hole, and the passage hole forming portion may have a smaller thickness than a surrounding area.

The thickness of the passage hole forming portion may decrease towards the passage hole.

The passage hole may have a uniform diameter in a length direction.

The passage hole may be formed by laser processing.

The detection cap may include Stainless Steel (SUS) to have corrosion resistance to prevent corrosion caused by the electrolyte.

A diameter of the detection cap may correspond to a diameter of the detection case.

The detection case may include a detection case neck to which the detection cap is coupled, and a detection case body extending from the detection case neck and configured to accommodate the electrolyte, wherein a groove is formed between an end of the detection cap and the detection case body.

The detection cap may be screw-coupled to the detection case.

The gas generation apparatus may further include a packing located between the detection cap and the detection case, wherein the packing has a hole having a larger diameter than the passage hole.

The packing may have corrosion resistance to prevent it from dissolving in the electrolyte and be made of a material other than rubber.

A leak measurement system according to an embodiment of the present disclosure includes a gas generation apparatus configured to generate an electrolyte gas, and a gas detection apparatus configured to measure the electrolyte gas generated by the gas generation apparatus, wherein the gas generation apparatus includes a detection case having a shape corresponding to a battery case of a secondary battery, the detection case having an opening to accommodate an electrolyte inside, and a detection cap having a passage hole through which the electrolyte gas passes, the detection cap configured to cover the opening, and wherein the passage hole has a diameter configured to allow the electrolyte gas generated by natural evaporation of the electrolyte to escape at a target concentration.

The target concentration may be equal to or higher than a minimum concentration of the electrolyte gas that can be measured by a gas detection sensor when a crack occurs in the secondary battery.

The diameter of the passage hole may be equal to or less than 7/2100 of a diameter of the detection cap.

The diameter of the passage hole may be equal to or less than 1/21000 of a diameter of the detection cap.

A detection cap according to an embodiment of the present disclosure is coupled to a detection case configured to accommodate an electrolyte inside, wherein the detection cap has a passage hole through which an electrolyte gas generated from the electrolyte passes, and wherein the passage hole has a diameter configured to allow the electrolyte gas generated by natural evaporation of the electrolyte to escape at a target concentration.

### ADVANTAGEOUS EFFECTS

The leak measurement system according to an embodiment of the present disclosure uses the gas detection sensor to detect electrolyte gas, thereby detecting electrolyte leak defects in secondary batteries without causing destruction to the secondary batteries.

The leak measurement system according to an embodiment of the present disclosure includes the gas generation apparatus for setting the concentration reference value corresponding to leaks to help the gas detection sensor to measure electrolyte leaks in unclean detection environments, thereby accurately measuring electrolyte leaks.

The gas generation apparatus according to an embodiment of the present disclosure may generate electrolyte gas corresponding to the concentration of electrolyte gas released in the event of cracks in secondary batteries, thereby measuring electrolyte leaks by reproducing electrolyte leak situations.

The gas generation apparatus to an embodiment of the present disclosure may control the diameter of the passage hole where natural evaporation and leakage of the electrolyte may occur and through which electrolyte gas passes, thereby generating the target concentration of electrolyte gas in a straightforward manner.

The gas generation apparatus to an embodiment of the present disclosure may be thinner at the area having the passage hole configured to generate a low concentration of electrolyte gas than the surrounding area, thereby forming the passage hole smoothly.

The gas generation apparatus to an embodiment of the present disclosure may be made of a corrosion-resistant material, thereby ensuring longevity even after contact with the electrolyte.

The cap used in the gas generation apparatus according to an embodiment of the present disclosure may be configured to have the above-described effects.

The effects that can be obtained from the present disclosure are not limited to the aforementioned effects, and these and other effects will be clearly understood by persons having ordinary skill in the technical field pertaining to the present disclosure from the following description.

### BRIEF DESCRIPTION OF THE DRAWINGS

FIG. 1 is a conceptual diagram showing that a leak measurement system according to a first embodiment of the present disclosure is used in an actual environment.
FIG. 2 is a front view showing that a gas detection apparatus shown in FIG. 1 is operating to have a reference value.
FIG. 3 is a perspective view showing a gas generation apparatus shown in FIG. 2.
FIG. 4 is an exploded view conceptually showing the configuration of the gas generation apparatus shown in FIG. 3.
FIG. 5 is a graph showing experiment results using an actual secondary battery to find the reference value of the gas detection apparatus shown in FIG. 2, according to a comparative example of the present disclosure.
FIG. 6 is a graph showing experiment results using the gas generation apparatus according to the first embodiment of the present disclosure to find the reference value of the gas detection apparatus shown in FIG. 2.
FIG. 7 is a perspective view showing a gas generation apparatus according to a second embodiment of the present disclosure.
FIG. 8 is a perspective view showing a gas generation apparatus according to a third embodiment of the present disclosure.

### BEST MODE

Hereinafter, the exemplary embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the subject matter of the present disclosure is omitted, and in affixing the reference numerals to the elements in each drawing, the identical or similar reference numerals are affixed to the identical or similar elements throughout the specification.

Additionally, it should be understood that the terms or words used in the specification and the appended claims should not be construed as limited to general and dictionary meanings, and rather, should be interpreted based on the meanings and concepts corresponding to the technical aspect of the present disclosure on the basis of the principle that the inventor is allowed to define the terms appropriately for the best explanation.

It should be understood that various embodiments of the present disclosure and the terms used herein are not intended to limit the technical features of the present disclosure to particular embodiments, and include a variety of changes, equivalents or substitutes of the corresponding embodiments.

In relation to the description of the drawings, for the similar or related elements, the similar reference numerals may be used.

The singular form of a noun corresponding to an item may include one or more items unless otherwise indicated by the context.

Each of phrases such as "A or B", "at least one of A and B", "at least one of A or B", "A, B or C", "at least one of A, B and C" and "at least one of A, B or C" as used herein may include any one of the items listed together with the corresponding phrase or all possible combinations of them.

The term "and/or" includes a combination of a plurality of related stated elements or any of the plurality of related stated elements.

The terms such as "first", "second" and so on may be simply used to distinguish the corresponding element from the corresponding other embodiment, and are not intended to limit the corresponding elements in another aspect (for example, importance or order).

When a certain (for example, first) element is referred to as being "coupled" or "connected" to another (for example, second) element with or without the term "functionally" or "through communication", the element may be connected to the other element directly (for example, wiredly), wirelessly or through a third element.

The term "comprise", "include" or "have" indicates the presence of the stated features, figures, steps, operations, elements, components or a combination of them, and does not preclude the presence or addition of one or more other features, figures, steps, operations, elements, components or a combination of them.

When an element is referred to as "being connected to", "being coupled to", "being supported by" or "contacting" another element, this includes not only direct connection, coupling, support or contact of the elements but also indirect connection, coupling, support or contact through a third element.

When an element is referred to as being located "on" another element, the element can contact the other element and intervening elements may be present.

Meanwhile, the terms "top-bottom direction", "lower", and "front-rear direction" as used herein are defined on the basis of the drawings, and the shape and location of each element is not limited by these terms.

Hereinafter, the embodiments according to the present disclosure will be described in detail with reference to the accompanying drawings.

### First embodiment

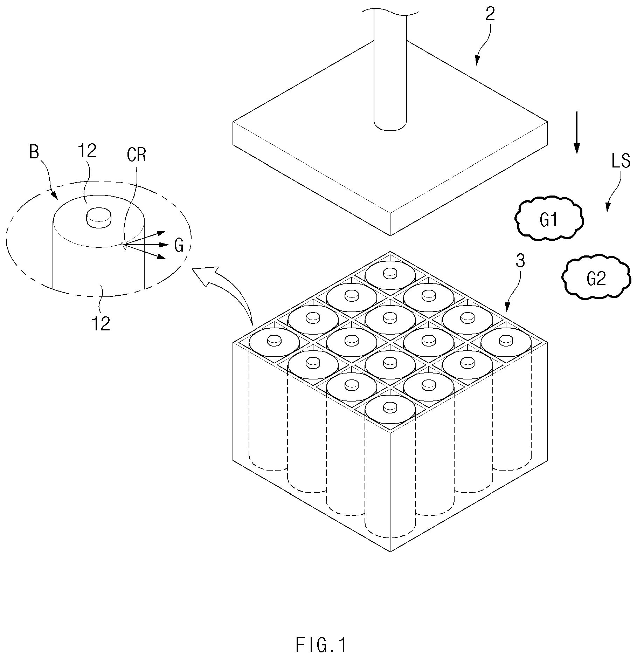

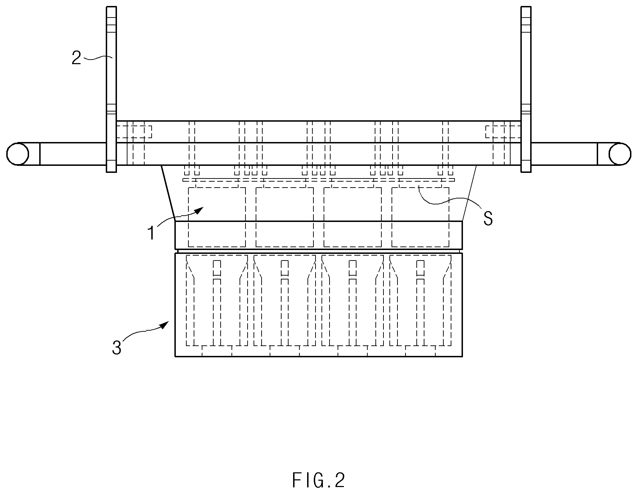

FIG. 1 is a conceptual diagram showing that a leak measurement system LS according to a first embodiment of the present disclosure is used in an actual environment. FIG. 2 is a front view showing that a gas detection apparatus 2 shown in FIG. 1 is operating to have a reference value.

Referring to FIGS. 1 and 2, the leak measurement system LS according to the first embodiment of the present disclosure will be described.

As shown in FIG. 1, a completed secondary battery B may undergo testing before being shipped. The secondary battery B may include a battery case 10 and an electrolyte 20 located within the battery case 10. The battery case 10 may be cylindrical in shape as shown in FIG. 1. However, if necessary, the battery case 10 may be prismatic or pouch-shaped. The electrolyte 20 may generally be liquid, but if necessary, the electrolyte 20 may be solid. The cylindrical secondary battery B may include a battery case body 12 having an opening and a battery case cap 11 that covers the opening of the battery case body 12. Through the opening of the battery case body 12, the electrolyte 20 may be housed in the battery case body 12, and subsequently, the battery case cap 11 may be placed to cover the opening of the battery case body 12 in order to seal the battery case 10. In this instance, the battery case cap 11 and the battery case body 12 may be joined by welding.

When overwelding or unwelding occurs in the welding process, the battery case 10 may not be completely sealed. Further, as shown in FIG. 1, a crack CR may occur in the battery case 10. The crack CR may cause leakage of the electrolyte 20 in the secondary battery B, and the secondary battery B having the crack CR may be classified as defective. When electrolyte leakage occurs in the secondary battery B, the secondary battery B may have a capacity decline, and the leaking electrolyte may have a negative effect on other secondary battery B, and accordingly it is necessary to detect the defective secondary battery B.

As a comparative example, a helium leak testing method is used to detect the crack CR in the secondary battery B. To perform the helium leak testing method, first, the secondary battery B may be selected as a leak test sample from a population. A hole may be formed at the bottom of the battery case 10 of the secondary battery B sample, and helium may be injected into the battery case 10 through the hole. However, helium may be replaced with another inert gas, if necessary. Further, the hole may be formed at any side other than the lower side of the battery case 10, if necessary. When negative pressure is formed around the secondary battery B, the injected helium leaks out through the crack CR if the crack CR occurred, so helium leakage testing is performed to test whether the crack CR occurred in the secondary battery B.

However, this method causes damage to the secondary battery B, and the tested secondary battery B can no longer be used. Further, because the test itself causes destruction to the secondary battery B, a method that selects and sorts out any defective secondary battery B by total inspection cannot be used. To prevent the release of the defective secondary battery B, a method may be used in which a plurality of secondary batteries B is split into groups, followed by sampling from each group and performing the above-described test, and all secondary batteries B in a group in which a defect occurred are discarded. However, this method may discard a normal secondary battery B, or when a defective secondary battery is not sorted out during sampling, it may be incorrectly determined that the corresponding group includes only normal secondary batteries B. To address this problem, the leak measurement system LS according to the first embodiment of the present disclosure may provide a method for testing the crack CR without causing destruction to the secondary battery B by using a gas detection sensor S. In other words, when the gas detection sensor S senses gas generated from the electrolyte 20 located within the battery case 10, it may be determined that the crack CR occurred in the battery case 10.

In view of the fact that the crack CR usually occurs in a welded part between the battery case body 12 and the battery case cap 11, the gas detection sensor S may test leakage of electrolyte gas G, especially between the battery case body 12 and the battery case cap 11. Further, for the gas detection sensor S to effectively detect a leak in the secondary battery B, the gas detection sensor S may be provided such that it is included in the gas detection apparatus 2 as shown in FIG. 1. The gas detection apparatus 2 may be configured to move toward the secondary battery B from above a tray 3 accommodating the secondary battery B to bring the gas detection sensor S closer to a part of the secondary battery B to be measured.

If necessary, the gas detection sensor S may measure the concentration of the electrolyte gas G leaking from the crack CR. However, when the electrolyte gas G leaking from the crack CR is sensed, the secondary battery B is determined to be defective due to the crack CR. Even though accurate concentration is not measured, determination that the electrolyte gas G is measured may be only made.

However, as shown in FIG. 1, because a space where the secondary battery B is placed on the tray 3 and undergoes the final test is generally not kept clean, one or more gases G1, G2 may be included due to the external environment. When the gas detection apparatus 2 detects one or more gases G1, G2 in the space where the secondary battery B is placed as the electrolyte gas G, an error may occur in the secondary battery B leak test. Accordingly, for accurate result values of the secondary battery B leak test, the gas detection apparatus 2 should not determine the gas concentration up to a specific level in the corresponding environment as a leak of the electrolyte gas G. For example, when placing a plate before placing an object on the scale, a process of setting a zero point to ignore the weight of the corresponding plate may be required for the gas detection apparatus 2 in the similar way. In this instance, the specific concentration of gas to be ignored may be referred to as a reference value or a threshold.

To this end, the leaking secondary battery B may be placed in the space where the corresponding test is conducted, and in this instance, a procedure for setting the reference may be performed to help the gas detection apparatus 2 to determine a leak. However, when the actual secondary battery B is used to go through this procedure, the amount of electrolyte leaking from the secondary battery B is not controlled, causing a leak in the actual secondary battery B and its consequential clogged crack CR, which stops the electrolyte leak, failing to keep electrolyte leak constant.

To address this problem, a gas generation apparatus 1 according to the first embodiment of the present disclosure may be provided. The gas generation apparatus 1 may be a sort of simulation apparatus capable of providing an electrolyte gas leak environment in the secondary battery B. Accordingly, as shown in FIG. 2, instead of the secondary battery B, the gas generation apparatus 1 may be inserted and provided to the tray 3 in the actual environment, and the gas detection apparatus 2 may measure the gas generation apparatus 1 to find the reference value. In other words, the gas detection apparatus 2 may be configured to measure the electrolyte gas G generated by the gas generation apparatus 1. It will be described in more detail below.

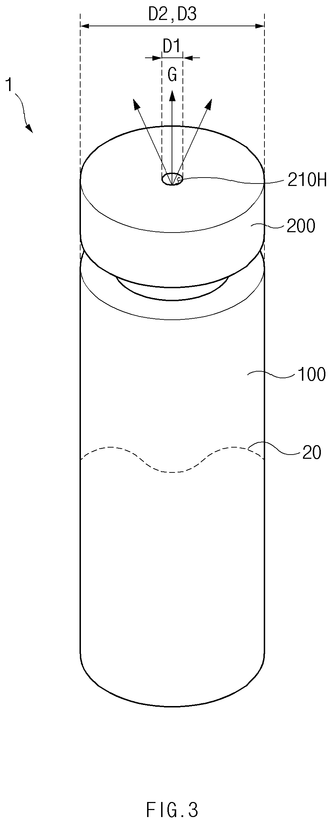

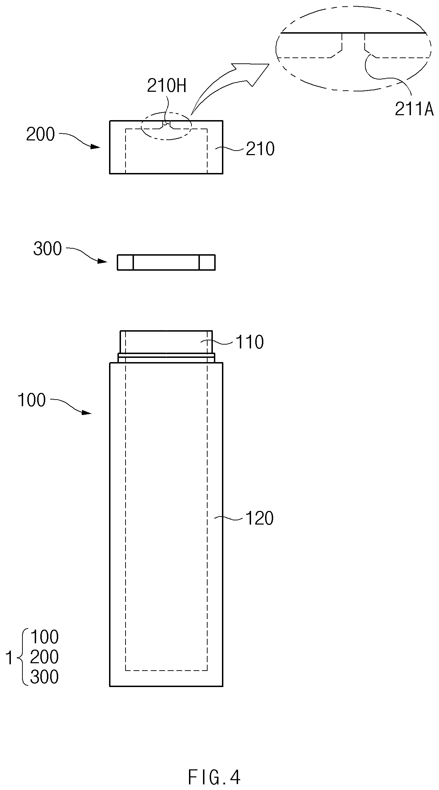

FIG. 3 is a perspective view showing the gas generation apparatus 1 shown in FIG. 2. FIG. 4 is an exploded view conceptually showing the configuration of the gas generation apparatus 1 shown in FIG. 3.

Referring to FIGS. 3 and 4, the gas generation apparatus 1 according to the first embodiment of the present disclosure will be described.

The gas generation apparatus 1 may have an appearance corresponding to the secondary battery B. The gas generation apparatus 1 may be formed in a cylindrical shape. Through this, it may be possible to reduce errors arising from the gas generation apparatus 1 having geometry that is different from the actual secondary battery B.

The gas generation apparatus 1 may include a detection case 100, a detection cap 200 and/or a packing 300. The packing 300 may be omitted if necessary.

The detection case 100 may have a shape corresponding to the battery case 10 of the secondary battery B. The detection case 100 may be formed in a cylindrical shape. The detection case 100 may have an opening to accommodate the electrolyte 20 inside. The electrolyte 20 may be fed into the detection case 100 through the opening. The detection case 100 may be made of a material having corrosion resistance to the electrolyte 20. The detection case 100 may include a detection case body 120 located at the lower side and a detection case neck 110 extending upward from the detection case body 120. The detection case neck 110 may have a smaller diameter than the detection case body 120. The detection case neck 110 may have screw threads on the outer side so as to be screw-coupled with the detection cap 200 as described below.

The detection cap 200 may cover the opening of the detection case 100. Accordingly, the detection cap 200 may be coupled to the detection case 100 on top of the detection case 100. The detection cap 200 may be detachably coupled to the detection case 100 to additionally inject the electrolyte 20 into the detection case 100 or remove the electrolyte 20 from the detection case 100. To this end, the detection cap 200 may have threads on the inner side so as to be screw-coupled to the detection case neck 110. In other words, the detection cap 200 may be screw-coupled to the detection case 100. Further, the detection cap 200 may include Stainless Steel (SUS) to have corrosion resistance to prevent corrosion caused by the electrolyte 20. However, the present disclosure is not limited thereto, and the detection cap 200 may be made of any other material having corrosion resistance.

The detection cap 200 may have a passage hole 210H through which the electrolyte gas G generated from the electrolyte 20 passes. Because the gas generation apparatus 1 has the passage hole 210H where the electrolyte gas G naturally evaporates and comes out, the gas generation apparatus 1 may not require a device for applying energy. Because the gas generation apparatus 1 does not include an intricate device for heating the electrolyte 20, the gas generation apparatus 1 may be manufactured at a low cost. Further, because a simple device is less likely to break down, the gas generation apparatus 1 according to the first embodiment of the present disclosure may have high durability.

The passage hole 210H may have a diameter D1 configured to allow the electrolyte gas G generated by the natural evaporation of the electrolyte 20 to escape at a target concentration. The electrolyte gas G escaping from the passage hole 210H needs to correspond to the concentration of the electrolyte gas G when a leak occurs in the actual secondary battery B, so the diameter D1 of the passage hole 210H may correspond to the concentration of the electrolyte 20 leak in the secondary battery B to be actually measured. More specifically, the target concentration may be equal to or higher than the minimum concentration of the electrolyte gas G that can be measured by the gas detection sensor S when the crack CR occurs in the secondary battery B. Because the gas detection sensor S cannot measure the infinitely small gas concentration, the minimum concentration that can be measured by the gas detection sensor S may be pre-determined. Accordingly, the passage hole 210H may have the small diameter D1 to fit the minimum concentration that can be measured by the gas detection sensor S.

For example, the diameter D1 of the passage hole 210H may be equal to or less than 7/2100 of a diameter D2 of the detection cap 200. More preferably, the diameter D1 of the passage hole 210H may be equal to or less than 1/21000 of the diameter D2 of the detection cap 200. For example, when the diameter D2 of the detection cap 200 is 21 mm, the diameter D1 of the passage hole 210H may be 10 µm or less. In particular, because the secondary battery B is produced in certain standard units, the diameter D1 of the passage hole 210H may have a diameter set in the standard unit.

In this instance, the detection cap 200 may include a passage hole forming portion 210 adjacent to the passage hole 210H to form the passage hole 210H. The passage hole forming portion 210 may have a smaller thickness than the surrounding area. As the diameter D1 of the passage hole 210H is smaller, process complexity may increase. To form the passage hole 210H, the passage hole 210H may be formed by laser processing. In this instance, to form the uniform passage hole 210H by laser processing, the area having the passage hole 210H may be preferably small in thickness. The passage hole 210H may be formed with the uniform diameter D1 in the length direction.

The thickness of the passage hole forming portion 210 may decrease towards the passage hole 210H. The passage hole forming portion 210 may be tapered toward the passage hole 210H. Accordingly, the inner surface of the passage hole forming portion 210 may have an inclined surface 211A that is inclined toward the passage hole 210H. The electrolyte gas G may move along the inclined surface 211A of the passage hole forming portion 210, and the movement of the electrolyte gas G may be concentrated by the inclined surface 211A.

In this instance, the diameter D2 of the detection cap 200 may correspond to a diameter D3 of the detection case 100. Through this, the appearance of the gas generation apparatus 1 may further correspond to the appearance of the cylindrical secondary battery B. A groove may be formed between the end of the detection cap 200 and the detection case body 120. The groove may be used to easily support the gas detection apparatus 2.

The packing 300 may be located between the detection cap 200 and the detection case 100 in the top-bottom direction. The packing 300 may have a donut shape with flat upper and lower sides. Accordingly, the packing 300 may have a hole inside. The hole of the packing 300 may have a larger diameter than the passage hole 210H. Accordingly, the flow of the electrolyte gas G toward the passage hole 210H may not be interrupted.

The packing 300 may seal between the detection cap 200 and the detection case 100. Accordingly, the packing 300 may include a compressible material. However, because rubber is generally prone to corrosion when it contacts the electrolyte 20, the packing 300 may include any material other than rubber to prevent corrosion even after contact with the electrolyte 20. The packing 300 may include, for example, ethylene propylene diene monomer (EPDM). In other words, the packing 300 may have corrosion resistance to prevent it from dissolving in the electrolyte 20.

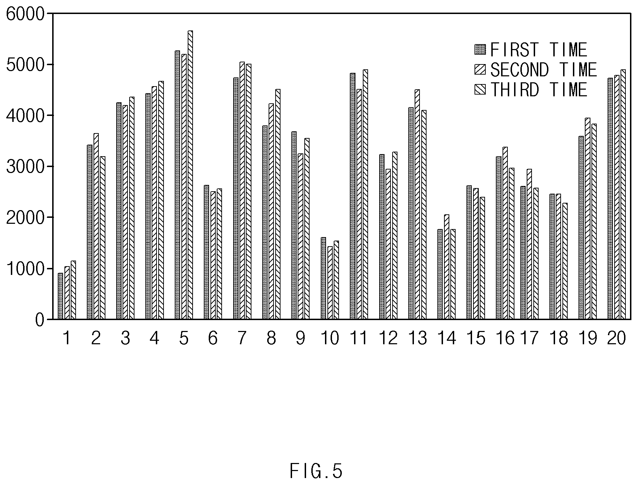

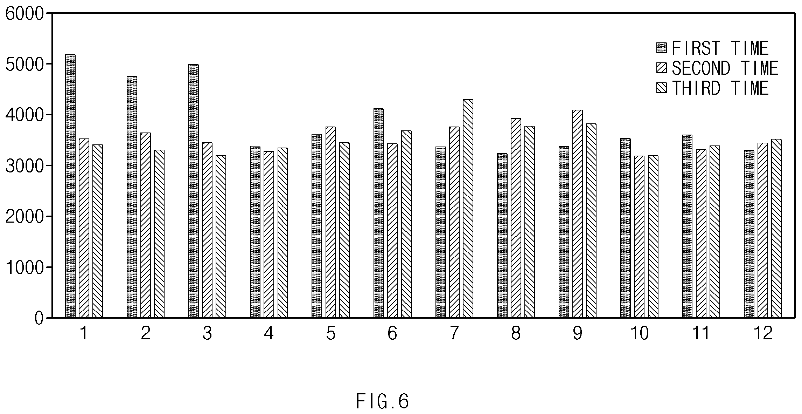

FIG. 5 is a graph showing experiment results using the actual secondary battery B to find the reference value of the gas detection apparatus 2 shown in FIG. 2, according to the comparative example of the present disclosure. FIG. 6 is a graph showing experiment results using the gas generation apparatus 1 according to the first embodiment of the present disclosure to find the reference value of the gas detection apparatus 2 shown in FIG. 2.

Referring to FIGS. 5 and 6, it is described that the use of the gas generation apparatus 1 according to the first embodiment of the present disclosure to find the reference value of the gas detection apparatus 2 outperforms the use of the secondary battery B.

FIG. 5 shows the measured concentration of electrolyte gas G using the secondary battery B. The y axis indicates the concentration as a delta value. The x axis indicates the number of each cell sample. A total of 20 cell samples were selected and the concentration of electrolyte gas G was measured three times for each cell, but the concentration of electrolyte gas G measured in each of 20 cells was not uniform.

FIG. 6 shows the measured concentration of electrolyte gas G of the gas generation apparatus 1 according to the first embodiment of the present disclosure. The description of the y axis is the same as the graph in FIG. 5. The x axis indicates the number of the gas generation apparatus 1. The concentration of the electrolyte 20 generated by each of a total of 12 gas generation apparatus 1 may be uniform compared to the concentration in the graph shown in FIG. 5.

Because the role as the sample used to set the reference value needs to provide uniform inputs, the use of the gas generation apparatus 1 generates the electrolyte gas G having more uniform concentration than the use of the secondary battery B, so it can be seen that the gas generation apparatus 1 according to the first embodiment of the present disclosure is more suitable as the sample.

Hereinafter, different embodiments from the first embodiment will be described. The description that is shared between the first embodiment and the other embodiments is omitted, and the other embodiments will be described based on differences. In other words, obviously, necessary details not described in the other embodiments may be compensated for through the description of the first embodiment.

### Second embodiment

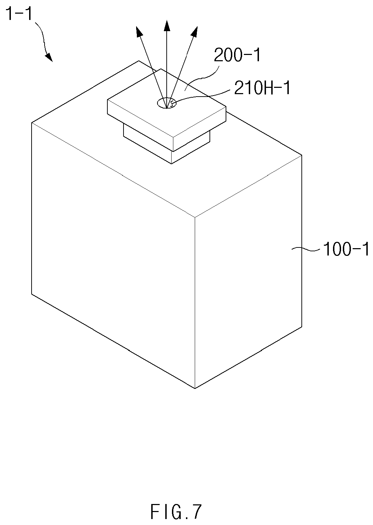

FIG. 7 is a perspective view showing a gas generation apparatus 1-1 according to a second embodiment of the present disclosure.

Referring to FIG. 7, the gas generation apparatus 1-1 according to the second embodiment of the present disclosure will be described.

The second embodiment is different from the first embodiment in that the gas generation apparatus 1-1 is formed in a prismatic shape.

The gas generation apparatus 1-1 may include a rectangular detection case 100-1 and a rectangular detection cap 200-1. The detection cap 200-1 may have a passage hole 210H-1 to generate the electrolyte gas G at a specific concentration in the same way as the first embodiment.

### Third embodiment

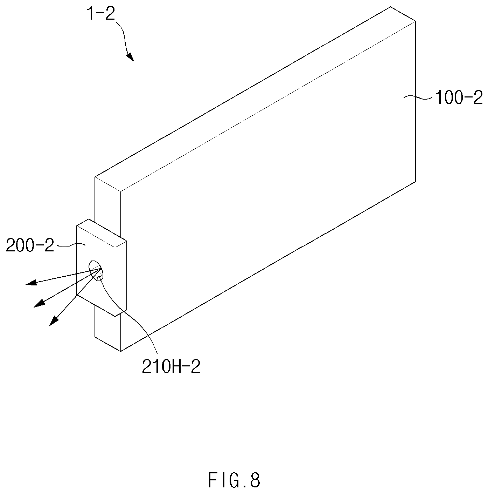

FIG. 8 is a perspective view showing a gas generation apparatus 1-2 according to a third embodiment of the present disclosure.

Referring to FIG. 8, the gas generation apparatus 1-2 according to the third embodiment of the present disclosure will be described.

The third embodiment is different from the first embodiment in that the gas generation apparatus 1-2 is formed in a pouch shape.

The gas generation apparatus 1-2 may include a rectangular detection case 100-2 and a rectangular detection cap 200-2. However, the gas generation apparatus 1-2 of the third embodiment may include the detection cap 200-2 located at the front and rear sides, not the upper and lower sides. Because the crack CR in the pouch type intensively occurs at the location of an electrode lead (not shown), the detection cap 200-2 is positioned at a location at which the crack CR is likely to occur accordingly.

The detection cap 200-2 may have a passage hole 210H-2 to generate the electrolyte gas G at a specific concentration in the same way as the first embodiment.

Unless expressly stated otherwise, the disclosed embodiments may be combined with other embodiments. Alternatively, in combining an embodiment with other embodiment, any combination of embodiments may be made unless expressly limited. It should be understood that such a combination of embodiments is disclosed in the present disclosure.

Although the present disclosure has been hereinabove described with regard to a limited number of embodiments and drawings, the present disclosure is not limited thereto, and the present disclosure may be embodied in different forms by persons having ordinary skill in the technical field pertaining to the present disclosure within the technical scope of the present disclosure and the appended claims and their equivalents.

### [List of Reference Numerals]

B: Secondary battery
10: Battery case
11: Battery case cap
12: Battery case body
CR: Crack
20: Electrolyte
G: Electrolyte gas
LS: Leak measurement system
1, 1-1, 1-2: Gas generation apparatus
100, 100-1, 100-2: Detection case
110: Detection case neck
120: Detection case body
200, 200-1, 200-2: Detection cap
210H, 210H-1, 210H-2: Passage hole
210: Passage hole forming portion
211A: Inclined surface
300: Packing
2: Gas detection apparatus
S: Gas detection sensor
3: Tray
D1: Diameter of passage hole
D2: Diameter of detection cap
D3: Diameter of detection case

## Claims

1. A gas generation apparatus comprising:
a detection case having a shape corresponding to a battery case of a secondary battery, the detection case having an opening to accommodate an electrolyte inside; and
a detection cap having a passage hole through which an electrolyte gas generated from the electrolyte passes, the detection cap configured to cover the opening,
wherein the passage hole has a diameter configured to allow the electrolyte gas generated by natural evaporation of the electrolyte to escape at a target concentration.

2. The gas generation apparatus according to claim 1,
wherein the target concentration is equal to or higher than a minimum concentration of the electrolyte gas that can be measured by a gas detection sensor when a crack occurs in the secondary battery.

3. The gas generation apparatus according to claim 1,
wherein the diameter of the passage hole is equal to or less than 7/2100 of a diameter of the detection cap.

4. The gas generation apparatus according to claim 1,
wherein the diameter of the passage hole is equal to or less than 1/21000 of a diameter of the detection cap.

5. The gas generation apparatus according to claim 1,
wherein the diameter of the passage hole is 10 µm or less.

6. The gas generation apparatus according to claim 1,
wherein the detection cap includes a passage hole forming portion adjacent to the passage hole to form the passage hole, and
wherein the passage hole forming portion has a smaller thickness than a surrounding area.

7. The gas generation apparatus according to claim 6,
wherein the thickness of the passage hole forming portion decreases towards the passage hole.

8. The gas generation apparatus according to claim 1,
wherein the passage hole has a uniform diameter in a length direction.

9. The gas generation apparatus according to claim 1,
wherein the passage hole is formed by laser processing.

10. The gas generation apparatus according to claim 1,
wherein the detection cap includes Stainless Steel (SUS) to have corrosion resistance to prevent corrosion caused by the electrolyte.

11. The gas generation apparatus according to claim 1,
wherein a diameter of the detection cap corresponds to a diameter of the detection case.

12. The gas generation apparatus according to claim 1,
wherein the detection case includes:
a detection case neck to which the detection cap is coupled; and
a detection case body extending from the detection case neck and configured to accommodate the electrolyte, and
wherein a groove is formed between an end of the detection cap and the detection case body.

13. The gas generation apparatus according to claim 1,
wherein the detection cap is screw-coupled to the detection case.

14. The gas generation apparatus according to claim 1, further comprising:
a packing located between the detection cap and the detection case,
wherein the packing has a hole having a larger diameter than the passage hole.

15. The gas generation apparatus according to claim 14,
wherein the packing has corrosion resistance to prevent it from dissolving in the electrolyte and is made of a material other than rubber.

16. A leak measurement system comprising:
a gas generation apparatus configured to generate an electrolyte gas; and
a gas detection apparatus configured to measure the electrolyte gas generated by the gas generation apparatus,
wherein the gas generation apparatus includes:
a detection case having a shape corresponding to a battery case of a secondary battery, the detection case having an opening to accommodate an electrolyte inside; and
a detection cap having a passage hole through which the electrolyte gas passes, the detection cap configured to cover the opening, and
wherein the passage hole has a diameter configured to allow the electrolyte gas generated by natural evaporation of the electrolyte to escape at a target concentration.

17. The leak measurement system according to claim 16,
wherein the target concentration is equal to or higher than a minimum concentration of the electrolyte gas that can be measured by a gas detection sensor when a crack occurs in the secondary battery.

18. The leak measurement system according to claim 16,
wherein the diameter of the passage hole is equal to or less than 7/2100 of a diameter of the detection cap.

19. The leak measurement system according to claim 16,
wherein the diameter of the passage hole is equal to or less than 1/21000 of a diameter of the detection cap.

20. A detection cap coupled to a detection case configured to accommodate an electrolyte inside,
wherein the detection cap has a passage hole through which an electrolyte gas generated from the electrolyte passes, and
wherein the passage hole has a diameter configured to allow the electrolyte gas generated by natural evaporation of the electrolyte to escape at a target concentration.
